# EUROPÄISCHE PATENTSCHRIFT

(11) **EP 1 317 967 B1**
(45) Veröffentlichungstag und Bekanntmachung des Hinweises auf die Patenterteilung: **27.07.2011**
(21) Anmeldenummer: 02025383.7
(22) Anmeldetag: 14.11.2002
(51) Int. Cl.: B05D 5/02

(54) **Diffus reflektierende Oberflächen und Verfahren zu deren Herstellung**
Diffusely reflecting surface and process for making it
Surface à réflexion diffuse et procédé pour sa fabrication

(30) Priorität: 06.12.2001 DE 10160055
(43) Veröffentlichungstag der Anmeldung: 11.06.2003
(73) Patentinhaber: Evonik Degussa GmbH, 45128 Essen (DE)
(72) Erfinder: Nun, Edwin, Dr., 48727 Billerbeck (DE); Oles, Markus, Dr., 45525 Hattingen (DE); Schleich, Bernhard, Dr., 45657 Recklinghausen (DE)

(56) Entgegenhaltungen:
- US-A- 3 637 285
- US-A- 4 242 396
- US-B1- 6 210 791
- US-B1- 6 217 176

## Beschreibung

Die vorliegende Erfindung betrifft diffus reflektierende Oberflächen, die selbstreinigend sind und vorzugsweise antimikrobielle Eigenschaften aufweisen sowie ein Verfahren zu deren Herstellung sowie deren Verwendung.

Matten, diffus reflektierende Oberflächen kommt in neuester Zeit wieder ein hoher Stellenwert zu. Spiegelnde bzw. gerichtet reflektierende Werkstoffe verhindern, dass Instrumenten-anzeigen, Sicherheits- und Gefahrenmarkierungen oder einfach nur Text oder Grafik von allen Betrachtungswinkeln aus zu jeder Zeit wahrgenommen werden können.

Werkstoffe mit mattierender Wirkung sind allgemein bekannt. So werden insbesondere auf Flachdächern Kunststoffkuppeln eingesetzt, die nicht vollständig transparent sind. Häufig wird das Mattieren durch Aufrauen der Oberfläche dieser Werkstoffe erzielt. Das Mattieren kann sowohl mechanisch als auch chemisch, z. B. durch Ätzen erfolgen.

Die aufgerauten Oberflächen haben den Nachteil, dass diese Oberflächen sich relativ schnell mit Schmutz- oder Staubpartikeln zusetzen (Innen und Außen) und somit die durch den Werkstoff hindurchtretende Lichtmenge verringert wird. Bei Benetzung mit Wasser geht außerdem die antireflektierende Wirkung zumindest teilweise verloren. In DE 42 18 215 wird dieser Nachteil umgangen, in dem ein Glasbaustein mit mattierender Wirkung hergestellt wird, der die aufgeraute Oberfläche im Innern des Glasbausteins aufweist. Die Herstellung solcher Glasbausteine ist relativ aufwändig und nicht auf alle möglichen Werkstoffe zu übertragen.

Aus einem gänzlich anderen Gebiet der Technik sind Gegenstände mit extrem schwer benetzbaren Oberflächen, sogenannte Lotus-Effekt-Oberflächen bekannt, die eine Reihe von wirtschaftlich bedeutsamen Merkmalen aufweisen, insbesondere sind solche Oberflächen selbstreinigend. So ist die Reinigung von Oberflächen zeit- und kostenintensiv. Selbstreinigende Oberflächen sind somit von höchstem wirtschaftlichen Interesse. Haftmechanismen werden üblicherweise durch grenzflächenenergetische Parameter zwischen den beiden sich berührenden Oberflächen bedingt. In der Regel versuchen dabei die Systeme ihre freie Grenzflächenenergie zu erniedrigen. Liegen die freien Grenzflächenenergien zwischen zwei Komponenten an sich auch schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr auf die Möglichkeit der Wechselwirkungen an. So ist beispielsweise beim Aufbringen von Wasser auf eine hydrophobe Oberfläche es nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr großen Kontaktwinkeln. Perfluorierte Kohlenwasserstoffe, z. B. Polytetrafluorethylen, haben eine sehr niedrige Grenzflächenenergie. Auf solchen Oberflächen haften kaum irgendwelche Komponenten, bzw. auf solchen Oberflächen abgelagerte Komponenten können sehr leicht wieder entfernt werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US PS 5,599,489 offenbart ein Verfahren, bei dem eine Oberfläche durch Beschuss mit Partikeln einer entsprechenden Größe aufgeraut und anschließender Perfluorierung besonders abweisend ausgestattet werden kann. Ein anderes Verfahren beschreiben H. Saito et al in "Service Coatings International" 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung festgestellt wurde.

Zahlreiche Veröffentlichungen zur Herstellung selbstreinigender Oberflächen existieren. Beispielhaft seien hier US-PS 3,354,022, WO 96/04132 und WO 00/58410 genannt. Derlei Oberflächen, werden immer zur Aufrechterhaltung der Oberflächensauberkeit beschrieben und/oder beansprucht. Als Oberflächenverunreinigungen werden dabei in der Regel Stäube genannt. Anschließend werden diese durch bewegtes Wasser, sei es durch Regen, Sprühregen, kondensierendem Nebel oder durch künstliche Beregnung, beispielsweise durch einen Wasserstrahl aus einem Wasserschlauch, an dem abrollenden Tropfen fixiert und mit dem Abrollen des Tropfens von der Oberfläche entfernt. Die Oberflächen können auch transparente Materialien sein. Die Herstellung bzw. Verwendung von lichtstreuenden Werkstoffen mit selbstreinigenden Eigenschaften wird hingegen nicht beschrieben.

In EP 1040874 werden selbstreinigende Oberflächen beschrieben, die ab einer Strukturierung kleiner 400 nm transparent sind und eine hohe Transmission bzw. gute optische Eigenschaften aufweisen. Das Phänomen der Mattierung bzw. der nicht gerichteten Reflektion ist in dieser Veröffentlichung allerdings nicht beschrieben. Die in EP 1040874 beschriebenen Oberflächen werden zumindest teilweise durch Prägen einer periodischen Struktur erhalten. Diese sind für die Herstellung von mattierten Werkstoffen gänzlich ungeeignet, da es bei periodischen Strukturen zur Ausbildung von Interferenzen kommen kann und somit winkelabhängig ein Regenbogenglanz durch die Lichtstreuung gegeben ist.

Aufgabe der vorliegenden Erfindung war es deshalb matt erscheinende, diffus reflektierende Oberflächen mit selbstreinigenden Eigenschaften zur Verfügung zu stellen, die vorzugsweise auch noch gleichzeitig einen Bewuchs mit Mikroorganismen retardieren.

Überraschenderweise wurde gefunden, dass Werkstoffe sowohl mit diffus reflektierenden Oberflächen als auch mit selbstreinigenden Eigenschaften ausgestatten werden können, wenn diese Werkstoffe in stochastischer Verteilung mit Partikeln mit einer Größe von 20 nm bis 100 µm beschichtet werden.

Gegenstand der vorliegenden Erfindung sind deshalb diffus reflektierende Oberflächen auf Basis einer lichtdurchlässigen, also transparenten oder transluzenten Beschichtung mit einer künstlichen Oberflächenstruktur aus Erhebungen und Vertiefungen, die eine partikuläre Beschichtung unter stochastischer Verteilung der Partikel an zumindest einer Oberfläche aufweist, wobei die Oberflächenstruktur lichtstreuende und selbstreinigende Eigenschaften und Erhebungen mit einer Höhe von 20 nm bis 100 µm und einem Abstand der Erhebungen von kleiner 100 µm aufweist.

Außerdem ist Gegenstand der vorliegenden Erfindung ein Verfahren zur Herstellung von diffus reflektierenden Oberflächen mit einer künstlichen Oberflächenstruktur gemäß zumindest einem der Ansprüche 1 bis 7, die selbstreinigende Eigenschaften aufweisen, wobei eine partikuläre Beschichtung unter stochastischer Verteilung der Partikel auf zumindest einer Oberfläche des Werkstoffes aufgebracht wird, welches dadurch gekennzeichnet ist, dass die Oberflächenstruktur, die mattierende bzw. diffus reflektierende und selbstreinigende Eigenschaften aufweist, Erhebungen mit einer Höhe von 20 nm bis 100 µm und einem Abstand der Erhebungen von < 100 µm aufweist.

Die Haupteigenschaft der erfindungsgemäßen diffus reflektierenden Oberflächen ist - neben der beschriebenen Selbstreinigung und der Verhinderung des Mikroorganismenwachstums - die, das Licht nicht gerichtet zu reflektieren sondern diffus zu streuen. Bei der Beschichtung von Verkehrsschildern mit Folien, die durch Prägen selbstreinigend ausgerüstet wurden, kann es über Interferenzbildung zu Farberscheinungen kommen aus denen Gefahren für den fließenden Verkehr resultieren können. Die erfindungsgemäßen diffus reflektierenden Oberflächen haben den Vorteil, dass sie diesen Nachteil der Interferenzbildung vermeiden, in dem eine stochastische Verteilung der Partikel eingesetzt wird und damit eine nichtperiodische Oberflächenstruktur erzielt wird. Weiterhin wird durch die erfindungsgemäßen Oberflächen die Veralgung und der Bewuchs mit anderen Mikroorganismen retardiert.

Die erfindungsgemäßen diffus reflektierenden Oberflächen werden nachfolgend näher beschrieben, ohne dass die Oberflächen auf diese Beschreibung beschränkt sein sollen. Die erfindungsgemäßen Oberflächen auf Basis lichtdurchlässiger, also transparenter oder transluzenter Beschichtungen mit einer künstlichen Oberflächenstruktur aus Erhebungen und Vertiefungen die eine partikuläre Beschichtung unter stochastischer Verteilung der Partikel an zumindest einer Oberfläche aufweist, wobei die Oberflächenstruktur entspiegelnde und selbstreinigende Eigenschaften aufweist, zeichnen sich dadurch aus, dass die Oberflächenstruktur Erhebungen mit einer Höhe von 20 nm bis 100 µm und einem Abstand der Erhebungen von kleiner 100 µm aufweisen.

Besonders gute selbstreinigende Eigenschaften in Kombination mit guten diffus reflektierenden Eigenschaften werden erzielt, wenn die Oberflächenstruktur hydrophobe Erhebungen mit einer Höhe von 50 nm bis 200 µm, vorzugsweise von 50 nm bis 100 µm und ganz besonders bevorzugt von 0,1 bis 20 um und vorzugsweise einen Abstand von 50 nm bis 75 µm und ganz besonders bevorzugt von 500 nm bis 5 µm aufweisen.

Es kann vorteilhaft sein, wenn die partikuläre Beschichtung antimikrobielle Eigenschaften aufweist. Solche mit antimikrobiellen Eigenschaften ausgestatteten, erfindungsgemäßen Oberflächen haben den Vorteil, dass aus ihnen bzw. unter der Verwendung dieser hergestellte Gegenstände über einen längeren Zeitraum als herkömmliche Gegenstände Licht nicht gerichtet sondern diffus streut, da die Oberfläche und damit die Lichtdurchtrittsfläche deutlich langsamer verschmutzt. Dies wird dadurch erreicht, dass die Anhaftung und Ausbreitung von biologischen Verschmutzungen, wie z. B. Bakterien, Pilzen und Algen deutlich verlangsamt wird und damit die selbstreinigenden Eigenschaften der Oberfläche der diffus reflektierenden Oberflächen länger wirksam erhalten bleiben. Die antimikrobiellen Eigenschaften werden vorzugsweise dadurch erzielt, dass die Beschichtung zumindest ein Material mit antimikrobiellen Eigenschaften aufweist. Als solche Materialien eignen sich insbesondere Homo- oder Copolymeren von Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether.

Die Erhebungen und Vertiefungen der Oberflächenstruktur werden dadurch gebildet, dass auf die Oberfläche eines Werkstoffes eine Beschichtung aufgebracht wird, die Partikel in stochastischer Verteilung aufweist. Die Partikel sind vorzugsweise mittels eines Trägersystems auf der Oberfläche fixiert.

Als Trägersysteme können insbesondere UV-härtbare, thermisch härtbare oder an der Luft härtende Coatingsysteme dienen. Unter Coatingsysteme fallen lackartige Mischungen aus einfach ungesättigten Acrylaten oder Methacrylaten mit mehrfach ungesättigten Acrylaten oder Methacrylaten, aber auch Mischungen der mehrfach ungesättigten Acrylate bzw. Methacrylate untereinander. Lacksysteme auf Urethanbasis gelten ebenfalls als Coatingsysteme. Die Mischungsverhältnisse können in weiten Grenzen variiert werden. Abhängig von der später zuzugebenden strukturbildenden Komponente, können weitere funktionelle Gruppen wie Hydroxygruppen, Ethoxygruppen, Amine, Ketone, Isocyanate oder ähnliche, aber auch fluorhaltige Monomere oder inerte Füllkomponenten, wie in Monomermischung lösliche Polymere, zugegeben werden. Die zusätzliche Funktionalität dient hauptsächlich der besseren Anbindung der Strukturbildner. Ferner können als Trägersysteme Reinacrylatdispersionen und PU-Lacksysteme (Polyurethan-Lacksysteme) verwandt werden. Es kann vorteilhaft sein, wenn das Trägersystem ebenfalls ein Material, welches antimikrobielle Eigenschaften aufweist, aufweist.

Die Partikel sind vorzugsweise hydrophobe Partikel. Es kann aber auch vorteilhaft sein, wenn die Partikel eine Mischung von hydrophoben Partikeln und Partikeln mit antimikrobiellen Eigenschaften sind. Ganz besonders bevorzugt weist die Oberfläche eine Mischung von hydrophoben Partikeln und Partikeln mit antimikrobiellen Eigenschaften auf, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist.

Vorzugsweise werden hydrophobe- oder hydrophobierte Partikel eingesetzt, die einen Partikeldurchmesser von 0,02 bis 100 µm, besonders bevorzugt von 0,1 bis 50 µm und ganz besonders bevorzugt von 0,3 bis 30 µm aufweisen. Die erfindungsgemäßen Oberflächenstrukturen weisen die einzelnen Partikel auf der Oberfläche in Abständen von 0 - 10 Partikeldurchmesser, insbesondere von 0 bis 3 Partikeldurchmesser, auf. Die antimikrobiellen, hydrophilen Partikel können vorzugsweise Partikeldurchmesser von 1 bis 2000 µm, bevorzugt 2 bis 1000 µm, und ganz besonders bevorzugt von 50 bis 500 µm aufweisen.

Um die Interferenzbildung weitestgehend auszuschließen kann es vorteilhaft sein, wenn die Oberflächenstruktur durch Partikel bzw. Partikelfraktionen gebildet werden, die unterschiedliche Partikelgrößen bzw. -durchmesser aufweisen. Vorzugsweise weist die Oberflächenstruktur zumindest zwei Partikelfraktionen auf, deren mittlere Partikelgröße sich um einen Faktor von 2 bis 10, vorzugsweise um einen Faktor von 4 bis 7 unterscheidet. Dies ist ein entscheidender Unterschied zu natürlichen oder naturähnlichen Systemen, da natürliche, selbstreinigende Oberflächen nahezu ausnahmslos glänzend erscheinen.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,2 bis 100 µm zusammenlagern.

Es kann vorteilhaft sein, wenn die eingesetzten hydrophoben- oder hydrophobierten Partikel eine strukturierte Oberfläche haben. Vorzugsweise werden diese Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise kleiner 500 nm, ganz besonders bevorzugt weniger als 200 nm. Diese Vertiefungen, wie z. B. Krater, rissartige Einkerbungen, Kerben, Spalten, Löcher und Kavitäten unterstützen die wirksame Struktur der Partikel. Weitere Strukturmerkmale, wie Hinterschnitte in den Vertiefungen oder Kombinationen aus den verschiedenen Vertiefungen, sind wirksamskeitssteigernd.

Als hydrophobe Partikel können transparente und/oder transluzente Partikel eingesetzt werden, die zumindest ein Material, ausgewählt aus Silikaten, dotierten oder pyrogenen Silikaten, Mineralien, Metalloxiden, Kieselsäuren oder Polymeren aufweisen Als Partikel, insbesondere als hydrophobe Partikel, die eine unregelmäßige Feinstruktur im Nanometerbereich an der Oberfläche aufweisen, werden vorzugsweise solche Partikel eingesetzt, die zumindest eine Verbindung, ausgewählt aus pyrogener Kieselsäure, Aluminiumoxid, Siliziumoxid, Mischoxide pyrogenen Silikaten oder pulverförmige Polymeren aufweisen. Es kann vorteilhaft sein, wenn die erfindungsgemäße Oberfläche Partikel aufweist, die hydrophobe Eigenschaften aufweisen. Die hydrophoben Eigenschaften der Partikel können durch das verwendete Material der Partikel inhärent vorhanden sein. Es können aber auch hydrophobierte Partikel eingesetzt werden, die z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, hydrophobe Eigenschaften aufweisen.

Als Partikel mit antimikrobiellen Eigenschaften, die in der Regel hydrophile Eigenschaften ausweisen, werden vorzugsweise solche eingesetzt, die Homo- oder Copolymere, ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether, aufweisen.

Der erfindungsgemäße diffus reflektierende Oberfläche kann auf einem Werkstoff aufgebracht sein, der eine Fläche eines Formkörpers aus einem Material, ausgewählt aus den Polymeren, wie z. B. Polyamiden, Polyurethanen, Polyetherblockamiden, Polyesteramiden, Polyvinylchlorid, Polyolefinen, Polysilikonen, Polysiloxanen, Polymethylmethacrylaten oder Polyterephthalaten, Metallen, Keramiken sowie Gläsern oder Polymerblends sein kann. Die Auflistung der polymeren Materialien ist nur beispielhaft und beschränkt sich nicht nur auf die gelisteten. Handelt es sich bei dem Formkörper um einen Formkörper aus Polymerem so kann es vorteilhaft sein, wenn dieser Formkörper, und damit die Oberfläche, ein Polymer mit antimikrobiellen Eigenschaften aufweist.

Erfindungsgemäße diffus reflektierende Oberflächen können sowohl auf Halbzeugen, geformte Gegenständen oder Körpern, Folien, Platten, Scheiben oder ähnlichem aufgebracht sein. Die diffus reflektierenden Oberflächen können ein-, zwei- oder mehrseitig auf Gegenständen aufgebracht sein. Oberflächen mit Oberflächenstrukturen, die selbstreinigende und lichtstreuende Eigenschaften aufweisen, können auch in Form von transparenten oder transluzenten Folien auf einen reflektierenden Gegenstand aufgebracht werden. Auch auf diese Weise hergestellte Gegenstände mit diffus reflektierenden Oberflächen werden von der vorliegenden Erfindung umfasst und beansprucht.

Die erfindungsgemäßen diffus reflektierenden Oberflächen werden vorzugsweise mit dem erfindungsgemäßen Verfahren zur Herstellung von diffus reflektierenden Oberflächen mit einer künstlichen Oberflächenstruktur, die lichtstreuende und selbstreinigende Eigenschaften aufweist, welches sich dadurch auszeichnet, dass eine Oberflächenstruktur die Erhebungen mit einer Höhe von 20 nm bis 100 µm und einem Abstand der Erhebungen von kleiner 100 µm aufweist, durch Aufbringen einer partikulären Beschichtung unter stochastischer Verteilung der Partikel auf zumindest eine Oberfläche eines Werkstoffes erzeugt wird, hergestellt. Das Aufbringen der Beschichtung und das Fixieren der Partikel auf der Oberfläche kann auf eine dem Fachmann bekannte Art und Weise erfolgen. Als chemische Methode der Fixierung kann z. B. die Verwendung eines Trägersystems eingesetzt werden. Als Trägersystem kommen verschiedene Klebstoffe, Haftvermittler oder Lacke in Frage mit der Maßgabe, dass das Trägersystem transparent oder transluzent ist. Dem Fachmann ergeben sich weitere Trägersysteme oder chemische Fixiermethoden.

Es kann vorteilhaft sein, wenn bei der Herstellung der Oberflächenstrukturen zumindest ein Material eingesetzt wird, welches antimikrobielle Eigenschaften aufweist.

Das Material, welches antimikrobielle Eigenschaften aufweist kann sowohl in der Oberfläche des Werkstoffes, als auch im Trägersystem oder im Partikelsystem vorhanden sein. Vorzugsweise weist zumindest ein Teil der eingesetzten Partikel ein Material, welches antimikrobielle Eigenschaften aufweist, auf. Bevorzugt wird als antimikrobielles Material ein Homo- oder Copolymer hergestellt aus Methacrylsäure-2-tert.-butylaminoethylester, Methacrylsäure-2-diethylaminoethylester, Methacrylsäure-2-diethylaminomethylester, Acryl-säure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether eingesetzt.

Ganz besonders bevorzugt wird eine Partikelmischung auf die Oberfläche aufgebracht, die Partikel mit antimikrobiellen Eigenschaften aufweist. Es kann vorteilhaft sein, wenn die Partikelmischung eine Mischung von strukturbildenden, vorzugsweise hydrophoben Partikeln und Partikeln mit antimikrobiellen Eigenschaften aufweist, die einen Gehalt an Partikeln mit antimikrobiellen Eigenschaften von 0,01 bis 25 Gew.-%, vorzugsweise von 0,1 bis 20 Gew.-% und ganz besonders bevorzugt von 1 bis 15 Gew.-%, bezogen auf die Partikelmischung aufweist. Die Partikel mit antimikrobiellen Eigenschaften können selbstverständlich ebenfalls zur Strukturbildung beitragen. Die Partikelmischung muss so abgestimmt werden, dass die antimikrobielle Wirkung erzeugt wird, aber die für die Selbstreinigung notwendige Hydrophobie noch dominiert.

Das Aufbringen der Partikelmischung auf die Oberfläche zur Erzeugung der Oberflächenstruktur und der antimikrobiellen Eigenschaften kann z. B. so durchgeführt werden, dass das Trägersysteme, welches eine härtbare Substanz sein kann, durch Aufsprühen, Aufrakeln, Aufstreichen oder Aufspritzen auf eine Oberfläche aufgebracht wird. Vorzugsweise wird die härtbare Substanz in einer Dicke von 1 bis 200 µm, vorzugsweise in einer Dicke von 5 bis 75 µm aufgebracht. Je nach Viskosität der härtbaren Substanz kann es vorteilhaft sein, die Substanz vor einem Aufbringen der Partikel anhärten zu lassen. Idealerweise wird die Viskosität der härtbaren Substanz so gewählt, dass die aufgebrachten Partikel zumindest teilweise in die härtbare Substanz einsinken können, die härtbare Substanz bzw. die auf ihr aufgebrachten Partikel aber nicht mehr verlaufen, wenn die Oberfläche senkrecht gestellt wird.

Das Aufbringen der Partikel selbst kann z. B. durch Aufsprühen erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an der härtbaren Substanz haften, durch Schütteln, Abbürsten oder Abblasen von der Oberfläche entfernt werden. Diese Partikel können gesammelt und wiedereingesetzt werden.

Bei einer bevorzugten Ausführungsart des erfindungsgemäßen Verfahren erfolgt das Fixieren der Partikel auf der Oberfläche durch Härten eines Trägersystems, wobei dieses vorzugsweise durch thermische Energie und/oder Lichtenergie erfolgt. Besonders bevorzugt erfolgt das Härten des Trägersystems durch Lichtenergie. Vorzugsweise erfolgt das Härten des Trägers unter einer Inertgas-Atmosphäre, ganz besonders bevorzugt unter einer Stickstoffatmosphäre.

Als Trägersysteme können insbesondere UV-härtbare, thermisch härtbare oder an der Luft härtende Coatingsysteme dienen. Unter Coatingsysteme fallen lackartige Mischungen aus einfach ungesättigten Acrylaten oder Methacrylaten mit mehrfach ungesättigten Acrylaten oder Methacrylaten, aber auch Mischungen der mehrfach ungesättigten Acrylate bzw. Methacrylate untereinander. Lacksysteme auf Urethanbasis gelten ebenfalls als Coatingsysteme. Die Mischungsverhältnisse können in weiten Grenzen variiert werden. Abhängig von der später zuzugebenden strukturbildenden Komponente, können weitere funktionelle Gruppen wie Hydroxygruppen, Ethoxygruppen, Amine, Ketone, Isocyanate oder ähnliche, aber auch fluorhaltige Monomere oder inerte Füllkomponenten, wie in Monomermischung lösliche Polymere, zugegeben werden. Die zusätzliche Funktionalität dient hauptsächlich der besseren Anbindung der Strukturbildner. Ferner können als Trägersysteme Reinacrylatdispersionen und PU-Lacksysteme verwandt werden. Es kann vorteilhaft sein, wenn das Trägersystem ebenfalls ein Material, welches antimikrobielle Eigenschaften aufweist, aufweist.

Als strukturgebende Partikel können hydrophobe- oder hydrophobierte transparente und/oder transluzente Partikel eingesetzt werden, die zumindest ein transparentes und/oder transluzentes Material, ausgewählt aus Silikaten, dotierten oder pyrogenen Silikaten, Mineralien, Metalloxiden, Kieselsäuren oder Polymeren vorzugsweise als Aggregat oder Agglomerat aufweisen. Besonders bevorzugt werden Partikel eingesetzt, die einen Partikeldurchmesser von 0,02 bis 100 µm, besonders bevorzugt von 0,1 bis 50 µm und ganz besonders bevorzugt von 0,3 bis 30 µm aufweisen. Die hydrophoben Partikel weisen bevorzugt Primärpartikel mit einem mittleren Primärpartikeldurchmesser von 5 nm bis 50 nm auf. Diese Primärpartikel liegen dann vorzugsweise agglomeriert oder aggregiert vor, wobei diese Aggregate bzw. Agglomerate Durchmesser von 20 nm bis 100 µm aufweisen.

Es kann vorteilhaft sein, wenn Partikelmischungen mit zumindest zwei Fraktionen von Partikeln mit unterschiedlichen Partikelgrößen eingesetzt werden. Auf diese Weise lässt sich verhindern, dass sich gleichgroße Partikel regelmäßig anordnen und es somit zu Interferenzbildungen kommt. Vorzugsweise werden zumindest zwei Fraktionen eingesetzt, die einen Unterschied der mittleren Partikelgrößen mit einem Faktor von 2 bis 10, vorzugsweise von 4 bis 7 aufweisen. Ebenso ist es natürlich möglich, dass als Partikel eine Partikelfraktion eingesetzt wird, die Partikel unterschiedlicher Größen aufweisen.

Vorzugsweise weisen die Partikel zur Generierung der selbstreinigenden Oberflächen hydrophobe Eigenschaften auf. Die Partikel können selbst hydrophob sein, wie z. B. PTFE aufweisende Partikel, oder die eingesetzten Partikel können hydrophobiert worden sein. Das Hydrophobieren der Partikel kann auf eine dem Fachmann bekannte Weise, z. B. durch eine Behandlung mit zumindest einer Verbindung aus der Gruppe der Alkylsilane, Perfluoralkylsilane, Paraffine, Wachse, Fettsäureestern, funktionalisierte langkettige Alkanderivate oder Alkyldisilazane, erfolgen. Typische hydrophobierte Partikel sind z. B. Feinstpulver wie Aerosil R 974 oder Aerosil R 8200 (Degussa AG), die käuflich zu erwerben sind.

Vorzugsweise werden solche hydrophoben, transparenten und/oder transluzenten Partikel, oder nachträglich hydrophobierte, transparente und/oder transluzente Partikel, die zumindest ein Material, ausgewählt aus Silikaten oder dotierten Silikaten, Mineralien, Metalloxiden, Metallmischoxiden, pyrogenen Kieselsäuren oder Fällungskieselsäuren oder Polymeren aufweisen, eingesetzt. Ganz besonders bevorzugt weisen die Partikel Silikate, pyrogene Kieselsäuren oder Fällungskieselsäuren, insbesondere Aerosile, SiO₂, TiO₂, ZrO₂ oder pulverförmige Polymere, wie z. B. kryogen gemahlenes oder sprühgetrocknet Polytetrafluorethylen (PTFE), auf.

Besonders bevorzugt werden hydrophobe Partikel mit einer BET-Oberfläche von 50 bis 600 m²/g eingesetzt. Ganz besonders bevorzugt werden Partikel eingesetzt, die eine BET-Oberfläche von 50 bis 200 m²/g aufweisen.

Als Partikel mit antimikrobiellen Eigenschaften können Partikel eingesetzt werden, die Homopolymere oder Copolymere, hergestellt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropyl-ester, Acrylsäure-2-diethylaminoethylester, Acrylsäure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether aufweisen. Die Partikel können ganz aus dem antimikrobielle Eigenschaften aufweisenden Material bestehen oder das antimikrobielle Material als Beschichtung aufweisen. Besonders bevorzugt werden Partikel mit antimikrobiellen Eigenschaften eingesetzt, die einen Partikeldurchmesser von 1 bis 2000 µm, besonders bevorzugt von 20 bis 1000 µm und ganz besonders bevorzugt von 5 bis 500 µm aufweisen.

Die antimikrobiell wirkenden Partikel dürfen nicht hydrophobiert werden, da durch eine Belegung der Oberfläche mit einem Hydrophobierungsreagenz die antimikrobielle Eigenschaft verloren geht.

Die Partikel können auch als Aggregate oder Agglomerate vorliegen, wobei gemäß DIN 53 206 unter Aggregaten flächig oder kantenförmig aneinander gelagerte Primärteilchen (Partikel) und unter Agglomeraten punktförmig aneinander gelagerte Primärteilchen (Partikel) verstanden werden. Als Partikel können auch solche eingesetzt werden, die sich aus Primärteilchen zu Agglomeraten oder Aggregaten mit einer Größe von 0,02 - 100 µm zusammenlagern.

Es kann vorteilhaft sein, wenn die eingesetzten Partikel eine strukturierte Oberfläche haben. Vorzugsweise werden Partikel, die eine unregelmäßige Feinstruktur im Nanometerbereich auf der Oberfläche aufweisen, eingesetzt. Die Feinstruktur der Partikel ist vorzugsweise eine zerklüftete Struktur mit Erhebungen und/oder Vertiefungen im Nanometerbereich. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm. Vertiefungen, wie z. B. Krater, rissartige Einkerbungen, Kerben, Spalten, Löcher und Kavitäten unterstützen die wirksame Struktur der Partikel. Kombinationen der Vertiefungen, sowie weitere Strukturelemente in Form von Hinterschnitten, können die erfindungsgemäßen Wirkungen verstärken.

Als Ausgangswerkstoff bzw. die Ausgangsoberfläche eines Werkstoffes kann zumindest eine Fläche eines Formkörpers, aus einem Material, ausgewählt aus den Polymeren, wie z. B. Polyamiden, Polyurethanen, Polyetherblockamiden, Polyesteramiden, Polyvinylchlorid, Polyolefinen, Polycarbonaten, Polystyrolen, Polysilikonen, Polysiloxanen, Polymethylmethacrylaten oder Polyterephthalaten, Keramiken, Metallen sowie mineralischen Gläsern oder Polymerblends eingesetzt werden. Die Auflistung der polymeren Materialien ist nur beispielhaft und beschränkt sich nicht nur auf die gelisteten. Handelt es sich bei dem Formkörper um einen Formkörper aus Polymerem so kann es vorteilhaft sein, wenn dieser Formkörper und damit die Oberfläche, ein Polymer mit antimikrobiellen Eigenschaften aufweist. Erfindungsgemäße Formkörper können sowohl Halbzeuge, geformte Gegenstände oder Körper, Folien, Platten, Scheiben oder ähnliches sein. Mittels des erfindungsgemäßen Verfahrens können erfindungsgemäße diffus reflektierenden Oberflächen auf einer, zwei oder mehreren Seiten eines Werkstoffes bzw. Formkörpers erzeugt werden, die selbstreinigende und lichtstreuende Eigenschaften aufweisen.

Das erfindungsgemäße Verfahren kann hervorragend zur Herstellung von diffus reflektierenden Oberflächen mit selbstreinigenden Eigenschaften eingesetzt werden. Mit solchen Werkstoffen mit diffus reflektierenden Oberflächen können z. B. Verkehrsschilder, Verkehrszeichen, Sicherheitskennzeichnungen und Instrumentenabdeckungen oder andere Gegenstände, wie beispielsweise Werbeträgerflächen oder Personen- und Fahrzeugleitsysteme, welche Informationen darstellen, hergestellt werden, die den Vorteil haben, dass sie beim Auftreffen von Licht den Betrachter nicht blenden. Zusätzlich können die auf solchen erfindungsgemäßen Gegenständen dargestellten Informationen von einem Betrachter aus Winkeln von bis herab zu 20°, vorzugsweise bis zu einem Winkel von bis herab zu 10° in Bezug auf die Fläche auf welcher die Information dargestellt wird, gelesen werden.

Insbesondere Verkehrsschilder, Verkehrszeichen, Sicherheitskennzeichnungen und Instrumentenabdeckungen sowie Werbeträgerflächen und Personen- und Fahrzeugleitelemente, welche dadurch gekennzeichnet sind, dass sie erfindungsgemäß diffus reflektierende Oberflächen aufweisen, sind aus den vorgenannten Gründen vorteilhaft.

Die erfindungsgemäßen diffus reflektierenden Oberflächen mit stochastischer Verteilung der Partikel haben insbesondere den Vorteil, dass sie eine gleichmäßige Lichtverteilung über die gesamte mit der Oberflächenstruktur ausgerüstete Oberfläche des Werkstoffes gewährleisten.

Verkehrsschilder, ausgerüstet mit den beanspruchten Oberflächen, bleiben unabhängig vom Standort und vom Betrachtungswinkel gut erkennbar, da die selbstreinigenden Eigenschaften der Oberflächenstruktur dafür sorgt, dass diese Schilder sehr viel langsamer verschmutzen als herkömmliche Schilder. Dies trifft naturgemäß auch für (Sicherheits-) Hinweise an Gebäuden oder Fabrikationsstätten, für Verkehrszeichen, für Personen- und Fahrzeugleitsysteme, für Werbeträgerflächen, für Sicherheitskennzeichnungen und für Instrumentenabdeckungen zu.

Der erfindungsgemäße Werkstoff sowie ein Verfahren zu dessen Herstellung wird anhand der nachfolgenden Beispiele näher erläutert, ohne dass die Erfindung auf diese Beispiele beschränkt sein soll.

### Beispiel 1:

20 Gew.-% Methylmethacrylat, 20 Gew.-% Pentaeritrittetraacrylat und 60 Gew.-% Hexandioldimethacrylat wurden miteinander vermischt. Bezogen auf diese Mischung werden 14 Gew.-% Plex 4092 F , ein acrylisches Copolymerisat der Röhm GmbH und 2 Gew.-% UV-Härter Darokur 1173 zugesetzt und mindestens 60 min lang gerührt. Auf ein extrudiertes Polymethylmethacrylat von 3 mm Plattenstärke wurde die hochvernetzende, UV-härtende Acrylatmischung in einer Dicke von 10 µm aufgetragen und anschließend mittels elektrostatischer Beschichtung Aerosil R 8200-Partikel aufgebracht. Diese Lack-Partikelbeschichtung wurde mittels UV-Strahlung bei einer Wellenlänge von 308 nm unter Stickstoff gehärtet. Auf die Unterseite der PMMA-Platte wurde ein Schriftzug aufgeklebt.

Die Platte wurde flach aufgelegt und visuell bestimmt, dass bei einem Winkel von 10°, bezogen auf die Ebene der Platte, der Schriftzug noch zu lesen war.

In einem Reflektometer wurden die Reflektionseigenschaften der Oberfläche bestimmt. Die erhaltene Größe ist eine dimensionslose Zahl. Je kleiner diese ist, desto diffuser ist das Licht. Die angegebenen Werte stellen den Mittelwert aus 4 Einzelmessungen dar.
Gemessen unter 20°: 3,7
Gemessen unter 60°: 7,9
Gemessen unter 85°: 2,9

### Vergleichsbeispiel 1:

Das gleiche System, wie im Beispiel 1, jedoch ohne das Aufbringen von Partikeln, liefert folgende Ergebnisse:
Unterhalb von 20°, bezogen auf die Ebene der beschichteten Platte, lässt sich der Schriftzug nicht mehr entziffern. Die Reflektionsmessungen lieferten unter:
20°: 147,8
60°: 149,7
85°: 117,6

## Patentansprüche

1. Diffus reflektierende Oberflächen auf Basis einer lichtdurchlässigen Beschichtung mit einer künstlichen Oberflächenstruktur aus Erhebungen und Vertiefungen, die eine partikuläre Beschichtung unter stochastischer Verteilung der Partikel an zumindest einer Oberfläche aufweist, wobei die Oberflächenstruktur lichtstreuende und selbstreinigende Eigenschaften und Erhebungen mit einer Höhe von 20 nm bis 100 µm und einem Abstand der Erhebungen von kleiner 100 µm aufweist.

2. Diffus reflektierende Oberfläche gemäß Anspruch 1,
**dadurch gekennzeichnet**,
das die Beschichtung antimikrobielle Eigenschaften aufweist.

3. Diffus reflektierende Oberfläche gemäß Anspruch 1 oder 2,
**dadurch gekennzeichnet,**
**dass** die Oberfläche Partikel aufweist, die mittels eines Trägersystems auf der Oberfläche fixiert sind.

4. Diffus reflektierende Oberfläche nach zumindest einem der Ansprüche 1 bis 3,
**dadurch gekennzeichnet,**
**dass** die Partikel aus einer Mischung von hydrophoben Partikeln und Partikeln mit antimikrobiellen Eigenschaften besteht

5. Diffus reflektierende Oberfläche nach zumindest einem der Ansprüche 2 oder 4,
**dadurch gekennzeichnet,**
**dass** das Material mit antimikrobiellen Eigenschaften zumindest ein antimikrobielles Polymer aufweist, welches aus zumindest einem Monomeren ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3₋dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopmpylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammomiumbromid, 2- Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

6. Diffus reflektierende Oberfläche nach Anspruch 4,
**dadurch gekennzeichnet,**
**dass** die Mischung der Partikel einen Gehalt an Partikeln mit antimikrobiellen Eigenschaften von 0,01 bis 25 Gew.-%, bezogen auf die Partikelmischung aufweist

7. Diffus reflektierende Oberfläche nach zumindest einem der Ansprüche 1 bis 6,
**dadurch gekennzeichnet,**
**dass** die Oberfläche auf zumindest eine Fläche eines Formkörpers aus einem Material, ausgewählt aus Polymeren der Gruppe Polyamide, Polyurethane, Polyetherblockamide, Polyesteramide, Polyvinylchlorid, Polyolefine, Polysilikone, Polysiloxane, Polymethylmethacrylate oder Polyterephthalate, Keramiken, Metallen sowie Gläsern aufgebracht ist.

8. Verfahren zur Herstellung von diffus reflektierende Oberflächen mit einer künstlichen Oberflächenstruktur gemäß zumindest einem der Ansprüche 1 bis 7, die lichtstreuende und selbstreinigende Eigenschaften aufweist,
**dadurch gekennzeichnet,**
**dass** eine Oberflächenstruktur die Erhebungen mit einer Höhe von 20 nm bis 100 µm und einem Abstand der Erhebungen von kleiner 100 µm aufweist, durch Aufbringen einer partikulären Beschichtung unter stochastischer Verteilung der Partikel auf zumindest eine Oberfläche des Werkstoffes erzeugt wird

9. Verfahren nach Anspruch 8,
**dadurch gekennzeichnet,**
**dass** bei der Herstellung der Oberflächenstrukturen zumindest ein Material eingesetzt wird, welches antimikrobielle Eigenschaften aufweist.

10. Verfahren gemäß Anspruch 8,
**dadurch gekennzeichnet,**
**dass** die Oberflächenstruktur durch Aufbringen und Fixieren von Partikeln auf der Oberfläche erzeugt wird.

11. Verfahren gemäß Anspruch 10,
**dadurch gekennzeichnet,**
**dass** zum Fixieren ein Trägersystem eingesetzt wird.

12. Verfahren gemäß zumindest einem der Ansprüche 8 bis 11,
**dadurch gekennzeichnet,**
**dass** die Oberfläche, die Partikel und/oder das Trägersystem das antimikrobielle Material aufweist.

13. Verfahren nach Anspruch 11,
**dadurch gekennzeichnet,**
**dass** als antimikrobielles Material ein Polymer eingesetzt wird, welches aus zumindest einem Monomeren ausgewählt aus Methacrylsäute-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminöethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2- Acryloyloxyethyl-4-benzoyldimethylammoniumbromid, 2-Methacryloyloxyethyl-4-benzoyldimethylammoniumbromid, 2-Acrylamido-2-methyl-1-propansulfonsäure, 2-Diethylaminoethylvinylether oder 3-Aminopropylvinylether hergestellt wurde.

14. Verfahren gemäß Anspruch 12 oder 13,
**dadurch gekennzeichnet,**
**dass** als Partikel eine Mischung aus transparenten und/oder transluzenten Partikeln, die zumindest ein Material, ausgewählt aus Silikaten, dotierten Silikaten, Mineralien, Metalloxiden; Kieselsäuren oder Polymeren aufweisen, mit Homo- oder Copolymerpartikeln ausgewählt aus Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acryl-säure-2-dimethylaminoethylester, Dimethylaminopropylmethacrylamid, Diethylamino-propylmethacrylamid, Acrylsäure-3-dimethylaminopropylamid, 2-Methacryloyloxyethyltrimethylammoniummethosulfat, Methacrylsäure-2-diethylaminoethylester, 1-Methacryloyloxyethyltrimethylammoniumchlorid, 3-Methacryloylaminopropyltrimethylammonium-chlorid, 2-Methacryloyloxyethyltrimethylammoniumchlorid, 2-Acryl-oyloxyethyl-4-benzoyldimethylammoniumbromid, 2-Methacryloyloxyethyl-4-benzoyl-dimethylammoniumbromid, 2-Acrylamido-2-methyl-1-propansulfonsäure, 2-Diethylaminoethylvinylether oder 3-Aminopropylvinylether aufweisen.

15. Verfahren gemäß zumindest einem der Ansprüche 12 bis 14,
**dadurch gekennzeichnet,**
**dass** die hydrophoben Partikel einen mittleren Primärpartikeldurchmesser von 5 nm bis 50 nm aufweisen.

16. Verfahren gemäß Anspruch 15,
**dadurch gekennzeichnet,**
**dass** die Primärpartikel weitestgehend agglomeriert oder aggregiert vorliegen und die Aggregate bzw. Agglomerate einen Durchmesser von 20 nm bis 100 µm aufweisen.

17. Verfahren gemäß zumindest einem der Ansprüche 12 bis 16,
**dadurch gekennzeichnet,**
**dass** die Partikel mit antimikrobiellen Eigenschaften einem Durchmesser von 20 bis 2000 µm aufweisen.

18. Verfahren gemäß zumindest einem der Ansprüche 12 bis 17,
**dadurch gekennzeichnet,**
**dass** die Partikel eine unregelmäßige Feinstruktur im Nanometerbereich auf der Oberfläche-aufweisen.

19. Verwendung von Werkstoffen gemäß einem der Ansprüche. 1 bis 7, zur Herstellung von Verkehrszeichen, Sicherheitskennzeichnungen, Werbeträgertlächen, Personen- und Fahrzeugleitsystemen und Instrumentenabdeckungen.

20. Verkehrszeichen,
**dadurch gekennzeichnet,**
**dass** sie eine diffus reflektierende Oberfläche gemäß zumindest einem der Ansprüche 1 bis 7 aufweisen.

21. Instrumentenabdeckungen,
**dadurch gekennzeichnet,**
**dass** sie eine diffus reflektierende Oberfläche gemäß zumindest einem der Ansprüche 1 bis 7 aufweisen.

22. Werbeträgerflächen,
**dadurch gekennzeichnet,**
**dass** sie eine diffus reflektierende Oberfläche gemäß zumindest einem der Ansprüche 1 bis 7 aufweisen.

23. Personen- und Fahrzeugleitsysteme,
**dadurch gekennzeichnet,**
**dass** sie eine diffus reflektierende Oberfläche gemäß zumindest einem der Ansprüche 1 bis 7 aufweisen.

## Claims

1. Diffuse-reflection surfaces based on a light-transmitting coating with an artificial surface structure made from elevations and depressions which comprises a specific coating with random distribution of the particles on at least one surface, where the surface structure comprises light-scattering and self-cleaning properties and comprises elevations with a height of from 20 nm to 100 µm and with a separation of less than 100 µm between the elevations.

2. Diffuse-reflection surface according to Claim 1,
**characterized in that**
the coating has antimicrobial properties.

3. Diffuse-reflection surface according to Claim 1 or 2,
**characterized in that**
the surface comprises particles which have been fixed to the surface by means of a carrier system.

4. Diffuse-reflection surface according to at least one of Claims 1 to 3,
**characterized in that**
the particles are composed of a mixture of hydrophobic particles and particles with antimicrobial properties.

5. Diffuse-reflection surface according to at least one of Claims 2 and 4,
**characterized in that**
the material with antimicrobial properties has at least one antimicrobial polymer which has been prepared from at least one monomer selected from the group consisting of 2-tert-butylaminoethyl methacrylate, 2-diethylaminoethyl methacrylate, 2-diethylaminomethyl methacrylate, 2-tert-butylaminoethyl acrylate, 3-dimethylaminopropyl acrylate, 2-diethylaminoethyl acrylate, 2-dimethylaminoethyl acrylate, dimethylaminopropylmethacrylamide, diethylaminopropylmethacrylamide, N-3-dimethylaminopropylacrylamide, 2-methacryloyloxyethyltrimethylammonium methosulfate, 2-methacryloyloxyethyltrimethylammonium chloride, 3-methacryloylaminopropyltrimethylammonium chloride, 2-acryloyloxyethyl-4-benzoyldimethylammonium bromide, 2-methacryloyloxyethyl-4-benzoyldimethylammonium bromide, 2-acrylamido-2-methyl-1-propanesulfonic acid, 2-diethylaminoethyl vinyl ether, and 3-aminopropyl vinyl ether.

6. Diffuse-reflection surface according to Claim 4,
**characterized in that**
the mixture of the particles comprises, based on the particle mixture, from 0.01 to 25% by weight content of particles with antimicrobial properties.

7. Diffuse-reflection surface according to at least one of Claims 1 to 6,
**characterized in that**
the surface has been applied to at least one area of a molding made from a material selected from polymers of the group consisting of polyamides, polyurethanes, polyether block amides, polyester amides, polyvinyl chloride, polyolefins, polysilicones, polysiloxanes, polymethyl methacrylates and polyterephthalates, ceramics, metals, and glasses.

8. Process for producing diffuse-reflection surfaces with an artificial surface structure, according to at least one of Claims 1 to 7, which has light-scattering and self-cleaning properties,
**characterized in that**
a specific coating with random distribution of the particles is applied to at least one surface of the material to generate a surface structure which comprises elevations with a height of from 20 nm to 100 µm and with a separation of less than 100 µm between the elevations.

9. Process according to Claim 8,
**characterized in that**
during production of the surface structures use is made of at least one material which has antimicrobial properties.

10. Process according to Claim 8,
**characterized in that**
the surface structure is generated by applying particles to the surface and fixing them thereto.

11. Process according to Claim 10,
**characterized in that**
a carrier system is used for the fixing process.

12. Process according to at least one of Claims 8 to 11,
**characterized in that**
the surface, the particles, and/or the carrier system comprises the antimicrobial material.

13. Process according to Claim 11,
**characterized in that**
the antimicrobial material used comprises a polymer which has been prepared from at least one monomer selected from the group consisting of 2-tert-butylaminoethyl methacrylate, 2-diethylaminoethyl methacrylate, 2-diethylaminomethyl methacrylate, 2-tert-butylaminoethyl acrylate, 3-dimethylaminopropyl acrylate, 2-diethylaminoethyl acrylate, 2-dimethylaminoethyl acrylate, dimethylaminopropylmethacrylamide, diethylaminopropylmethacrylamide, N-3-dimethylaminopropylacrylamide, 2-methacryloyloxyethyltrimethylammonium methosulfate, 2-methacryloyloxyethyltrimethylammonium chloride, 3-methacryloylaminopropyltrimethylammonium chloride, 2-acryloyloxyethyl-4-benzoyldimethylammonium bromide, 2-methacryloyloxyethyl-4-benzoyldimethylammonium bromide, 2-acrylamido-2-methyl-1-propanesulfonic acid, 2-diethylaminoethyl vinyl ether, and 3-aminopropyl vinyl ether.

14. Process according to Claim 12 or 13,
**characterized in that**
the particles used comprise a mixture made from transparent and/or translucent particles which comprise at least one material selected from the group consisting of silicates, doped silicates, minerals, metal oxides, silicas, and polymers, with homo- or copolymer particles selected from the group consisting of 2-tert-butylaminoethyl methacrylate, 2-diethylaminoethyl methacrylate, 2-diethylaminomethyl methacrylate, 2-tert-butylaminoethyl acrylate, 3-dimethylaminopropyl acrylate, 2-diethylaminoethyl acrylate, 2-dimethylaminoethyl acrylate, dimethylaminopropylmethacrylamide, diethylaminopropylmethacrylamide, N-3-dimethylaminopropylacrylamide, 2-methacryloyloxyethyltrimethylammonium methosulfate, 2-methacryloyloxyethyltrimethylammonium chloride, 3-methacryloylaminopropyltrimethylammonium chloride, 2-acryloyloxyethyl-4-benzoyldimethylammonium bromide, 2-methacryloyloxyethyl-4-benzoyldimethylammonium bromide, 2-acrylamido-2-methyl-1-propanesulfonic acid, 2-diethylaminoethyl vinyl ether, and 3-aminopropyl vinyl ether.

15. Process according to at least one of Claims 12 to 14,
**characterized in that**
the average primary particle diameter of the hydrophobic particles is from 5 to 50 nm.

16. Process according to Claim 15,
**characterized in that**
the primary particles are very substantially present in agglomerated or aggregated form, and the diameter of the aggregates or agglomerates is from 20 nm to 100 µm.

17. Process according to at least one of Claims 12 to 16,
**characterized in that**
the diameter of the particles with antimicrobial properties is from 20 to 2000 µm.

18. Process according to at least one of Claims 12 to 17,
**characterized in that**
the particles have an irregular fine nanostructure on the surface.

19. Use of surfaces according to any of Claims 1 to 7, for producing traffic signs, safety markings, advertising medium surfaces, systems for guiding pedestrians or for guiding vehicles, or protective covers for instruments.

20. Traffic signs,
**characterized in that**
they have a diffuse-reflection surface according to at least one of Claims 1 to 7.

21. Protective covers for instruments,
**characterized in that**
they have a diffuse-reflection surface according to at least one of Claims 1 to 7.

22. Advertising medium surfaces,
**characterized in that**
they have a diffuse-reflection surface according to at least one of Claims 1 to 7.

23. Systems for guiding pedestrians or for guiding vehicles,
**characterized in that**
they have a diffuse-reflection surface according to at least one of Claims 1 to 7.

## Revendications

1. Surfaces à réflexion diffuse à base d'un revêtement transparent à la lumière présentant avec une structure de surface artificielle d'élévations et de creux, qui présente un revêtement particulaire avec une répartition stochastique des particules sur au moins une surface, la structure de surface présentant des propriétés de dispersion de la lumière et autonettoyantes et des élévations d'une hauteur de 20 nm à 100 µm et une distance entre les élévations inférieure à 100 µm.

2. Surface à réflexion diffuse selon la revendication 1, **caractérisée en ce que** le revêtement présente des propriétés antimicrobiennes.

3. Surface à réflexion diffuse selon la revendication 1 ou 2, **caractérisée en ce que** la surface présente des particules qui sont fixées à la surface au moyen d'un système support.

4. Surface à réflexion diffuse selon au moins l'une quelconque des revendications 1 à 3, **caractérisée en ce que** les particules sont constituées par un mélange de particules hydrophobes et de particules présentant des propriétés antimicrobiennes.

5. Surface à réflexion diffuse selon au moins l'une quelconque des revendications 2 ou 4, **caractérisée en ce que** le matériau présentant des propriétés antimicrobiennes présente au moins un polymère antimicrobien, qui a été préparé à partir d'au moins un monomère choisi parmi l'ester 2-tert-butylaminoéthylique de l'acide méthacrylique, l'ester 2-diéthylaminoéthylique de l'acide méthacrylique, l'ester 2-diéthylaminométhylique de l'acide méthacrylique, l'ester 2-tert-butylaminoéthylique de l'acide acrylique, l'ester 3-diméthylaminopropylique de l'acide acrylique, l'ester 2-diéthylaminoéthylique de l'acide acrylique, l'ester 2-diméthylaminoéthylique de l'acide acrylique, le diméthylaminopropylméthacrylamide, le diéthylaminopropylméthacrylamide, le 3-diméthylaminopropylamide de l'acide acrylique, le méthosulfate de 2-méthacryloyloxyéthyltriméthylammonium, le chlorure de 2-méthacryloyloxyéthyltriméthylammonium, le chlorure de 3-méthacryloylaminopropyltriméthylammonium, le bromure de 2-acryloyloxyéthyl-4-benzoyldiméthylammonium, le bromure de 2-méthacryloyloxyéthyl-4-benzoyldiméthylammonium, l'acide 2-acrylamido-2-méthyl-1-propanesulfonique, le 2-diéthylaminoéthylvinyléther ou le 3-aminopropylvinyléther.

6. Surface à réflexion diffuse selon la revendication 4, **caractérisée en ce que** le mélange des particules présente une teneur en particules avec des propriétés antimicrobiennes de 0,01 à 25% en poids, par rapport au mélange de particules.

7. Surface à réflexion diffuse selon au moins l'une quelconque des revendications 1 à 6, **caractérisée en ce que** la surface est appliquée sur au moins une face d'un corps façonné en un matériau, choisi parmi les polymères du groupe formé par les polyamides, les polyuréthanes, les polyéther-bloc-amides, les polyesteramides, le poly(chlorure de vinyle), les polyoléfines, les polysilicones, les polysiloxanes, les poly(méthacrylates de méthyle) ou les polytéréphtalates, les céramiques, les métaux ainsi que les verres.

8. Procédé pour la préparation de surfaces à réflexion diffuse avec une structure de surface artificielle selon au moins l'une quelconque des revendications 1 à 7, qui présente des propriétés de dispersion de la lumière et autonettoyantes, **caractérisé en ce qu'**une structure de surface qui présente des élévations d'une hauteur de 20 nm à 100 µm et une distance entre les élévations inférieure à 100 µm est produite par application d'un revêtement particulaire avec répartition stochastique des particules sur au moins une surface du matériau.

9. Procédé selon la revendication 8, **caractérisé en ce que** lors de la réalisation des structures de surface, au moins un matériau est utilisé qui présente des propriétés antimicrobiennes.

10. Procédé selon la revendication 8, **caractérisé en ce que** la structure de surface est produite par application et fixation de particules sur la surface.

11. Procédé selon la revendication 10, **caractérisé en ce qu'**un système support est utilisé pour la fixation.

12. Procédé selon au moins l'une quelconque des revendications 8 à 11, **caractérisé en ce que** la surface, les particules et/ou le système support présente(nt) le matériau antimicrobien.

13. Procédé selon la revendication 11, **caractérisé en ce qu'**on utilise comme matériau antimicrobien un polymère, qui a été préparé à partir d'au moins un monomère choisi parmi l'ester 2-tert-butylaminoéthylique de l'acide méthacrylique, l'ester 2-diéthylaminoéthylique de l'acide méthacrylique, l'ester 2-diéthylaminométhylique de l'acide méthacrylique, l'ester 2-tert-butylaminoéthylique de l'acide acrylique, l'ester 3-diméthylaminopropylique de l'acide acrylique, l'ester 2-diéthylaminoéthylique de l'acide acrylique, l'ester 2-diméthylaminoéthylique de l'acide acrylique, le diméthylaminopropylméthacrylamide, le diéthylaminopropylméthacrylamide, le 3-diméthylaminopropylamide de l'acide acrylique, le méthosulfate de 2-méthacryloyloxyéthyltriméthylammonium, le chlorure de 2-méthacryloyloxyéthyltriméthylammonium, le chlorure de 3-méthacryloylaminopropyltriméthylammonium, le bromure de 2-acryloyloxyéthyl-4-benzoyldiméthylammonium, le bromure de 2-méthacryloyloxyéthyl-4-benzoyldiméthylammonium, l'acide 2-acrylamido-2-méthyl-1-propanesulfonique, le 2-diéthylaminoéthylvinyléther ou le 3-aminopropylvinyléther.

14. Procédé selon la revendication 12 ou 13, **caractérisé en ce qu'**on utilise comme particules un mélange de particules transparentes et/ou translucides, qui présentent au moins un matériau choisi parmi les silicates, les silicates dopés, les minéraux, les oxydes métalliques, les silices ou les polymères, avec des particules homopolymères ou copolymères choisis parmi l'ester 2-tert-butylaminoéthylique de l'acide méthacrylique, l'ester 2-diéthylaminoéthylique de l'acide méthacrylique, l'ester 2-diéthylaminométhylique de l'acide méthacrylique, l'ester 2-tert-butylaminoéthylique de l'acide acrylique, l'ester 3-diméthylaminopropylique de l'acide acrylique, l'ester 2-diéthylaminoéthylique de l'acide acrylique, l'ester 2-diméthylaminoéthylique de l'acide acrylique, le diméthylaminopropylméthacrylamide, le diéthylaminopropylméthacrylamide, le 3-diméthylaminopropylamide de l'acide acrylique, le méthosulfate de 2-méthacryloyloxyéthyltriméthylammonium, le chlorure de 2-méthacryloyloxyéthyltriméthylammonium, le chlorure de 3-méthacryloylaminopropyltriméthylammonium, le bromure de 2-acryloyloxyéthyl-4-benzoyldiméthylammonium, le bromure de 2-méthacryloyloxyéthyl-4-benzoyldiméthylammonium, l'acide 2-acrylamido-2-méthyl-1-propanesulfonique, le 2-diéthylaminoéthylvinyléther ou le 3-aminopropylvinyléther

15. Procédé selon au moins l'une quelconque des revendications 12 à 14, **caractérisé en ce que** les particules hydrophobes présentent un diamètre moyen de particules de 5 nm à 50 nm.

16. Procédé selon la revendication 15, **caractérisé en ce que** les particules primaires se trouvent sous une forme largement agglomérée ou agrégée et les agrégats ou, selon le cas, les agglomérats présentent un diamètre de 20 nm à 100 µm.

17. Procédé selon au moins l'une quelconque des revendications 12 à 16, **caractérisé en ce que** les particules avec des propriétés antimicrobiennes présentent un diamètre de 20 à 2000 µm.

18. Procédé selon au moins l'une quelconque des revendications 12 à 17, **caractérisé en ce que** les particules présentent une structure fine irrégulière dans la plage des nanomètres sur la surface.

19. Utilisation de surfaces selon l'une quelconque des revendications 1 à 7, pour la réalisation de panneaux de signalisation, des signalisations de sécurité, des surfaces de support de publicité, des systèmes de fléchage pour personnes et véhicules et des protections d'instruments.

20. Panneaux de signalisation, **caractérisés en ce qu'**ils présentent une surface à réflexion diffuse selon au moins l'une quelconque des revendications 1 à 7.

21. Protections d'instruments, **caractérisés en ce qu'**elles présentent une surface à réflexion diffuse selon au moins l'une quelconque des revendications 1 à 7.

22. Surfaces de support de publicité, **caractérisées en ce qu'**elles présentent une surface à réflexion diffuse selon au moins l'une quelconque des revendications 1 à 7.

23. Systèmes de fléchage pour personnes et véhicules, **caractérisés en ce qu'**ils présentent une surface à réflexion diffuse selon au moins l'une quelconque des revendications 1 à 7.
